# EUROPÄISCHE PATENTSCHRIFT

(11) **EP 1 838 511 B1**
(45) Veröffentlichungstag und Bekanntmachung des Hinweises auf die Patenterteilung: **23.01.2019**
(21) Anmeldenummer: 05818703.0
(22) Anmeldetag: 10.12.2005
(51) Int. Cl.: B29C 45/16

(54) **VERFAHREN ZUR HERSTELLUNG EINES VERBUNDFORMTEILES AUS KUNSTSTOFF UND DESSEN VERWENDUNG**
METHOD FOR THE PRODUCTION OF A COMPOSITE MOLDED PART MADE OF PLASTIC, AND USE THEREOF
PROCEDE DE PRODUCTION D'UNE PIECE MOULEE COMPOSITE EN PLASTIQUE, ET UTILISATION DE CETTE PIECE

(30) Priorität: 24.12.2004 DE 102004062477
(43) Veröffentlichungstag der Anmeldung: 03.10.2007
(73) Patentinhaber: Covestro Deutschland AG, 51373 Leverkusen (DE)
(72) Erfinder: ZÖLLNER, Olaf, 51375 Leverkusen (DE); JUST, Thorsten, 97950 Grossrinderfeld (DE); KOHL, Winfried, 1600 Isando (ZA)
(74) Vertreter: Levpat
(86) Internationale Anmeldenummer: PCT/EP2005/013278
(87) Internationale Veröffentlichungsnummer: WO 2006/072361

(56) Entgegenhaltungen:
- EP-A- 0 607 968
- DE-A1- 2 461 925
- US-A- 5 338 592
- PATENT ABSTRACTS OF JAPAN Bd. 2000, Nr. 23, 10. Februar 2001 (2001-02-10) -& JP 2001 170964 A (UBE IND LTD), 26. Juni 2001 (2001-06-26)
- PATENT ABSTRACTS OF JAPAN Bd. 2003, Nr. 12, 5. Dezember 2003 (2003-12-05) -& JP 2003 334838 A (NIPPON BEE CHEMICAL CO LTD; NISSEI PLASTICS IND CO), 25. November 2003 (2003-11-25)
- PATENT ABSTRACTS OF JAPAN Bd. 015, Nr. 160 (M-1105), 22. April 1991 (1991-04-22) -& JP 03 030922 A (YAMAHA CORP), 8. Februar 1991 (1991-02-08)

## Beschreibung

Die Erfindung betrifft ein Verfahren zur Herstellung eines Verbundformteiles aus mehreren Kunststoffschichten und dessen Verwendung.

Aus der Literatur sind Verbunde aus Metallfolien und Polymeren bekannt, wobei diese Schichten entweder verklebt und/oder durch Temperatur und Druck miteinander verbunden werden. Nachteil dieser Verbundsysteme ist, dass Wärme und Druck zur Verbindung der Schichten in einem separaten Schritt erzeugt werden müssen. Darüber hinaus ist es häufig erforderlich, die Schichtkanten nachzuarbeiten. Befestigungselemente und dergleichen müssen nachträglich in einem separaten Schritt angebracht werden.

Das Hinterspritzen von Kunststoffteilen scheint aus dem Stand der Technik bekannt:
US 6,264,869 B1 beschreibt ein Verfahren zur Erzeugung eines dekorativen Elements, umfassend die folgenden Schritte: Einbringen eines starren Substrats mit dreidimensionalen Designelementen in eine erste Form, in welcher eine Kavität belassen wird, in die ein Kunststoffmaterial eingespritzt wird, daraufhin Bedecken dieses Verbundes mit einem transparenten Kunstoffmaterial als Schutzschicht, indem der in Schritt eins erhaltene Verbund in eine weitere Kavität eingebracht wird, in welche das zweite, transparente Kunststoffmaterial eingespritzt werden kann.

US 2003/0197307 A1 beschreibt das Aufbringen einer dekorativen Beschichtungsschicht eines duroplastischen Materials mit Metallfarbe in einer Kavität auf ein Formteil, US-A-5,338,592 zeigt einen weiteren Stand der Technik.

Aufgabe war es daher, ein Verfahren zur Verfügung zu stellen, mit dem es auf technisch einfache und kostengünstige Weise möglich ist, Verbundformteile aus mehreren Schichten herzustellen, so dass die Schichten haftend miteinander verbunden sind und gegebenenfalls weitere Elemente, wie beispielsweise Befestigungselemente, bei der Herstellung direkt mit angebracht werden können.

Diese Aufgabe konnte durch das erfindungsgemäße Verfahren gelöst werden. Gegenstand der Erfindung ist ein Verfahren zur Herstellung eines Verbundteiles aus mehreren Schichten, wobei
a) eine Kunststofffolie in eine erste Hälfte eines geöffneten Spritzgießwerkzeugs eingelegt wird, wobei als Kunststoff für die Folie Polycarbonat, Polymethylmethacrylat, Styrolacrylnitril, ein Cycloolefincopolymer, transparentes Polyamid oder Blends dieser Kunststoffe eingesetzt sind,
b) das Werkzeug geschlossen wird, indem die zweite Hälfte des Werkzeugs auf der ersten Hälfte angebracht wird, so dass ein Hohlraum gebildet wird,
c) die Folie im Werkzeug mit Kunststoff zur Erzeugung eines Formteils haftend hinterspritzt wird, wobei der zum Hinterspritzen verwendete Kunststoff Polycarbonat, Styrolacrylnitril, ein Cycloolefincopolymer oder Polymethylmethacrylat ist,
d) das Werkzeug nach Abkühlung geöffnet wird und eine der beiden Hälften des Werkzeugs entfernt wird, wobei das Formteil aus c) in der anderen Hälfte verbleibt,
e) danach das Werkzeug mittels einer Werkzeughälfte, die gegebenenfalls mit externem Formtrennmittel versehen ist, erneut geschlossen wird, und dabei eine Kavität zwischen der Wand dieser Werkzeughälfte und dem Formteil erzeugt wird, wobei die Kavität auf der Seite des Formteils liegt, die der Seite mit der Kunststofffolie gegenüberliegt,
f) in die Kavität ein Lack eingespritzt wird, wobei der Lack ein Urethanacrylat-, ein 2-Komponenten-Polyurethanlack oder ein Lack auf Basis von Polysiloxanen ist,
g) das Werkzeug nach Aushärtung des Lackes geöffnet und das lackierte Formteil entnommen wird.

Die eingesetzte Folie kann vorzugsweise auf mindestens einer Seite mindestens teilweise beschichtet sein.

Das erfindungsgemäße Verfahren kann so durchgeführt werden, dass die beschichtete Folie in Schritt a) so in die Werkzeughälfte eingelegt wird, dass entweder die Beschichtung zur Werkzeugwand gerichtet ist oder dass die Beschichtung von der Wand der Werkzeughälfte abgewandt ist.

Die eingesetzte Kunststofffolie ist bevorzugt 0,175 bis 3,00 mm dick. Die Folie kann mittels Siebdruck, durch Vakuum oder auch durch andere bekannte Beschichtungstechniken beschichtet werden. Als Beschichtungsmaterialien können Farben, Metalle oder dergleichen eingesetzt werden.

Anstelle einer einfachen Kunststofffolie mit oder ohne Beschichtung kann auch ein Folienverbund eingesetzt werden. Die einfachste Ausführungsform ist ein dreischichtiger Aufbau aus einer Kunststofffolie, beispielsweise einer Metallschicht und daran sich anschließend wieder eine Kunststofffolie. Der Vorteil eines derartigen Aufbaus besteht darin, dass die Beschichtung geschützt ist.

Damit die Folie, die in die eine Hälfte des offenen Werkzeugs eingelegt wird, nicht verrutscht, wird sie vorzugsweise durch Vakuum, statische Aufladung oder durch mechanische Verankerung in der Werkzeughälfte fixiert.

Wird die Folie so in die Werkzeughälfte eingelegt, dass die Beschichtung nach innen zeigt, wird diese Beschichtung beim Hinterspritzen direkt mit dem eingespritzten Kunststoff bedeckt. Wird hingegen die Folie so in das Werkzeug eingelegt, dass die Beschichtung nach außen zeigt, wird der Kunststoff beim Hinterspritzen direkt auf die Kunststofffolie gespritzt.

Die eingesetzte Folie ist vorzugsweise transparent. Als Kunststoffmaterial für die Folie werden Polycarbonat (PC), Polymethylmethacrylat (PMMA), Styrolacrylnitril (SAN) und Cyclopolyolefincopolymere (COC), transparentes Polyamid und Blends dieser Kunststoffe eingesetzt.

Als Kunststoff für das Hinterspritzen wird PC, SAN, COC und PMMA eingesetzt. Die Kunststoffe für das Hinterspritzen sind ebenfalls bevorzugt transparent.

Das Werkzeug wird für den Schritt c) vorzugsweise auf 70 bis 110°C beheizt.

Nach dem Hinterspritzen wird das Werkzeug nach Abkühlung geöffnet. Danach wird die Werkzeughälfte, in der sich das Formteil befindet, mit einer neuen Werkzeughälfte zusammengeführt, wobei eine Kavität zwischen der Wand der neuen Werkzeughälfte und dem Formteil gebildet wird. Diese Kavität ist ein Spalt zwischen der Wand der neuen Werkzeughälfte und des Formteils. Diese Kavität kann entweder dadurch gebildet werden, indem die neue Werkzeughälfte etwas größer ist als die vorangegangene Werkzeughälfte, die entfernt wurde, oder dadurch, dass das Formteil während des Abkühlvorganges geschrumpft ist. In diesem Fall benötigt man keine neue größere Werkzeughälfte, sondern kann die Hälfte benutzen, die vorab verwendet wurde.

In die so gebildete Kavität (Spalt, Hohlraum) wird dann der Lack eingebracht. Der Spalt entspricht der Dicke des aufgetragenen Lackes.

Als Lack werden die bekannten Lacksysteme eingesetzt werden, die UV-Schutz und/oder Kratzfestigkeit bieten, d.h. Urethanacrylate, 2-Komponenten-Polyurethanlacke oder anorganische Lacke, bevorzugt auf Basis von Polysiloxanen.

Die erfindungsgemäßen Verbundteile können in der Automobilindustrie, insbesondere als Innen- und Außenspiegel für Fahrzeuge und in anderen Industriezweigen als Formteil verwendet werden.

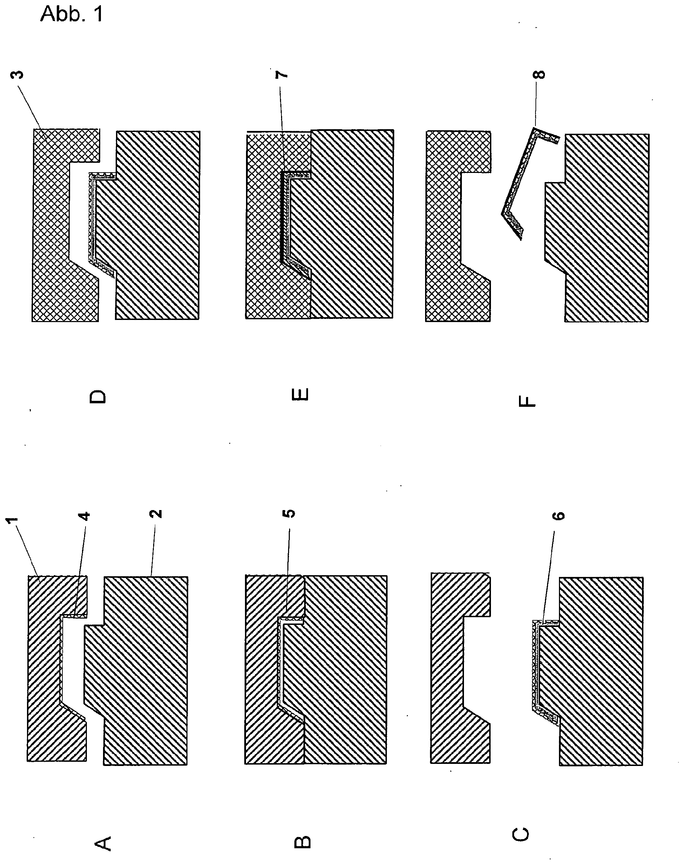

Abbildung 1 zeigt unter A) eine Form mit einer ersten Hälfte (1) und einer zweiten Hälfte (2), wobei in der ersten Hälfe eine Kunststofffolie (4) eingelegt ist. Unter B) ist die Form geschlossen, in dem die beiden Hälften aufeinander gestellt werden und dabei ein Hohlraum (5) gebildet wird. C) und D) zeigen den Austausch der Hälfte (1) durch eine weitere Hälfte (3), nachdem in den Hohlraum (5) ein Kunststoff (6) eingespritzt wurde. E) zeigt den Lack (7), der in den Spalt eingespritzt wurde, der durch die zweite Hälfte (2) und die weitere Hälfte (3) gebildet wird. Unter F) wird das Formteil (8) entfernt.

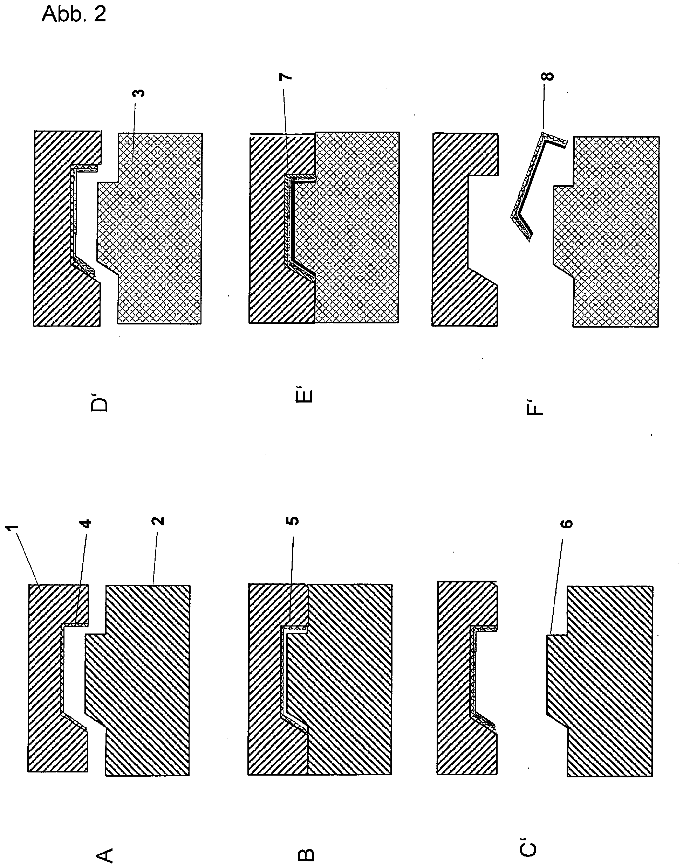

Abbildung 2 zeigt unter A) eine Form mit einer ersten Hälfte (1) und einer zweiten Hälfte (2), wobei in der ersten Hälfe eine Kunststofffolie (4) eingelegt ist. Unter B) ist die Form geschlossen, in dem die beiden Hälften aufeinander gestellt werden und dabei ein Hohlraum (5) gebildet wird. C') und D') zeigen den Austausch der Hälfte (2) durch eine weitere Hälfte (3), nachdem in den Hohlraum (5) ein Kunststoff (6) eingespritzt wurde. E') zeigt den Lack (7), der in den Spalt eingespritzt wurde, der durch die erste Hälfte (1) und die weitere Hälfte (3) gebildet wird. Unter F') wird das Formteil (8) entfernt.

Die Erfindung soll anhand des nachfolgenden Beispiels näher erläutert werden.

### Beispiel

### Herstellung eines Verbundteiles in Form eines Spiegels:

In ein Stahlwerkzeug wurde in eine erste Werkzeughälfte eine metallisierte Polycarbonatfolie (Makroion® DE 1.1; 0,175 mm dick) eingelegt. Durch elektrostatische Aufladung wurde diese Folie im Werkzeug gehalten. Die Werkzeugtemperatur lag bei ca. 70°C. Nach dem Schließen der Form mittels der zweiten Werkzeughälfte wurde Polycarbonat (Makroion® AL 2647) in das Werkzeug gespritzt. Die Temperatur des Makrolon® AL 2647 lag bei 290°C. Die Einspritzzeit lag bei ca. 5 Sekunden. Nach etwa 30 Sekunden Abkühlzeit wird das Werkzeug geöffnet. Das Formteil verblieb in der ersten Werkzeughälfte. Danach wurde eine neue Werkzeughälfte zum Schließen des Werkzeuges eingesetzt. Es verblieb ein Spalt zwischen dem Makrolon® A1 2647 des Formteils und der neuen Werkzeughälfte. Der Spalt wurde auf ca. 0,1 mm eingestellt. In diesen freien Spalt wurde ein 2-Komponenten Polyurethanlack¹) (basierend auf Desmophen® und Desmodur®) eingespritzt. Das Lacksystem hatte eine Temperatur von 80°C und das Werkzeug von ca. 60°C. Die Einspritzzeit lag bei ca. 2 Sekunden. Zur Aushärtung des Lackes wurden ca. 80 Sekunden benötigt. Danach wurde das Werkzeug geöffnet und das fertige Verbundteil entnommen.

Bei dem eingesetzten Lack¹) handelt es sich um einen lösemittelfreien aliphatischen Polyurethanlack aus einer Mischung aus einem lösemittelfreien Polyesterpolyol (Desmophen® VPLS 22 49-1 der Fa. Bayer MaterialScience AG) und einem lösemittelfreien aliphatischen Polyisocyanat (Desmodur® XP 2410 der Fa. Bayer MaterialScience AG) in einem Mengenverhältnis von 1:1 (mit ca. 1 Gew.-% DBTL (Dibutylzinndilaurat) katalysiert).

## Patentansprüche

1. Verfahren zur Herstellung eines Verbundteiles aus mehreren Schichten, wobei
a) eine Kunststofffolie in eine erste Hälfte eines geöffneten Spritzgießwerkzeugs eingelegt wird, wobei als Kunststoff für die Folie Polycarbonat, Polymethylmethacrylat, Styrolacrylnitril, ein Cycloolefincopolymer, transparentes Polyamid oder Blends dieser Kunststoffe eingesetzt sind,
b) das Werkzeug geschlossen wird, indem die zweite Hälfte des Werkzeugs auf der ersten Hälfte angebracht wird, so dass sich ein Hohlraum bildet,
c) die Folie im Werkzeug mit Kunststoff zur Erzeugung eines Formteils haftend hinterspritzt wird, wobei der zum Hinterspritzen verwendete Kunststoff Polycarbonat, Styrolacrylnitril, ein Cycloolefincopolymer oder Polymethylmethacrylat ist,
d) das Werkzeug nach Abkühlung geöffnet wird und die zweite Hälfte des Werkzeugs entfernt wird, wobei das Formteil aus c) in der ersten Hälfte verbleibt,
e) danach das Werkzeug mittels einer weiteren Werkzeughälfte, die gegebenenfalls mit externem Formtrennmittel versehen ist, erneut geschlossen wird, und dabei eine Kavität zwischen der Wand dieser Werkzeughälfte und dem Formteil erzeugt wird, wobei die Kavität auf der Seite des Formteils liegt, die der Seite mit der Kunststofffolie gegenüberliegt,
f) in die Kavität ein Lack eingespritzt wird, wobei der Lack ein Urethanacrylat-, ein 2-Komponenten-Polyurethanlack, ein anorganischer Lack oder ein Lack auf Basis von Polysiloxanen ist,
g) das Werkzeug nach Aushärtung des Lackes geöffnet und das lackierte Formteil entnommen wird.

2. Verfahren gemäß Anspruch 1, wobei die Kunststofffolie auf mindestens einer Seite mindestens teilweise beschichtet ist.

3. Verfahren gemäß Anspruch 2, wobei die beschichtete Folie in Schritt a) so in die Werkzeughälfte eingelegt wird, dass die Beschichtung zur Werkzeugwand gerichtet ist.

4. Verfahren gemäß Anspruch 2, wobei die beschichtete Folie in Schritt a) so in die Werkzeughälfte eingelegt wird, dass die Beschichtung von der Wand der Werkzeughälfte abgewandt ist.

5. Verwendung der nach dem Verfahren gemäß einem der Ansprüche 1 bis 3 hergestellten Verbundteile in der Automobilindustrie, insbesondere als Innen- und Außenspiegel für Fahrzeuge sowie in anderen Industriezweigen als Formteil.

## Claims

1. Process for the production of a composite part made of a plurality of layers, where
a) a plastics film is inserted into a first half of an opened injection mould, where plastic used for the film comprises polycarbonate, polymethyl methacrylate, styrene-acrylonitrile, a cycloolefin copolymer, transparent polyamide or a blend of these plastics,
b) the mould is closed in that the second half of the mould is applied to the first half to form a cavity,
c) the film in the mould is in-mould coated with plastic which adheres thereto to produce a moulding, the plastic used for the in-mould-coating procedure being polycarbonate, styrene-acrylonitrile, a cycloolefin copolymer or polymethyl methacrylate,
d) the mould is opened after cooling, and the second half of the mould is removed, whereupon the moulding from c) remains in the first half,
e) the mould is then again closed by means of another mould half to which external mould release agent has optionally been provided, and a cavity is thus formed between the moulding and the wall of this mould half, the location of the cavity being on that side of the moulding that is opposite to the side with the plastics film,
f) a lacquer is injected into the cavity, the lacquer being a urethane acrylate lacquer, a two-component polyurethane lacquer, an inorganic lacquer or a lacquer based on polysiloxanes,
g) after hardening of the lacquer, the mould is opened and the lacquered moulding is removed.

2. Process according to Claim 1, where the plastics film has been coated at least to some extent on at least one side.

3. Process according to Claim 2, wherein the coated film is inserted in step a) into the mould half in a manner such that the coating is directed towards the mould wall.

4. Process according to Claim 2, wherein the coated film is inserted in step a) into the mould half in a manner such that the coating faces away from the wall of the mould half.

5. Use of the composite parts produced by the process according to any of Claims 1 to 3 in the automobile industry, in particular as interior and exterior mirrors for motor vehicles, and also as moulding in other branches of industry.

## Revendications

1. Procédé de fabrication d'une pièce composite constituée par plusieurs couches, selon lequel
a) une feuille en matière plastique est disposée dans une première moitié d'un outil de moulage par injection ouvert ; du polycarbonate, du polyméthacrylate de méthyle, du styrène-acrylonitrile, un copolymère de cyclooléfine, un polyamide transparent ou un mélange de ces matières plastiques étant utilisé en tant que matière plastique pour la feuille,
b) l'outil est fermé en disposant la deuxième moitié de l'outil sur la première moitié, de manière à former une cavité,
c) la feuille est surmoulée par adhésion dans l'outil avec la matière plastique pour former une pièce moulée, la matière plastique utilisée pour le surmoulage étant du polycarbonate, du styrène-acrylonitrile, un copolymère de cyclooléfine ou du polyméthacrylate de méthyle,
d) l'outil est ouvert après refroidissement et la deuxième moitié de l'outil est retirée, la pièce moulée de c) restant dans la première moitié, puis
e) l'outil est de nouveau fermé avec une autre moitié d'outil, qui est éventuellement munie d'un agent de démoulage externe, et une cavité est formée entre la paroi de cette moitié d'outil et la pièce moulée, la cavité se trouvant sur le côté de la pièce moulée qui est opposé au côté muni de la feuille en matière plastique,
f) un vernis est injecté dans la cavité, le vernis étant un vernis à base d'acrylate d'uréthane, un vernis à base de polyuréthane bicomposant, un vernis inorganique ou un vernis à base de polysiloxanes,
g) l'outil est ouvert après le durcissement du vernis et la pièce moulée vernie est extraite.

2. Procédé selon la revendication 1, dans lequel la feuille en matière plastique est au moins partiellement revêtue sur au moins un côté.

3. Procédé selon la revendication 2, dans lequel la feuille revêtue à l'étape a) est disposée dans la moitié d'outil de telle sorte que le revêtement soit orienté vers la paroi de l'outil.

4. Procédé selon la revendication 2, dans lequel la feuille revêtue à l'étape a) est disposée dans la moitié d'outil de telle sorte que le revêtement soit orienté dans la direction opposée à la paroi de la moitié d'outil.

5. Utilisation des pièces composites fabriquées par le procédé selon l'une quelconque des revendications 1 à 3 dans l'industrie automobile, notamment en tant que rétroviseurs intérieurs et extérieurs pour véhicules, ainsi que dans d'autres branches de l'industrie en tant que pièce moulée.
